# EUROPÄISCHE PATENTANMELDUNG

(11) **EP 4 187 235 A1**
(43) Veröffentlichungstag der Anmeldung: **31.05.2023**
(21) Anmeldenummer: 22203656.8
(22) Anmeldetag: 25.10.2022
(51) Int. Cl.: G01N 21/88, G06T 7/00

(54) **VERFAHREN ZUM KLASSIFIZIEREN EINER ÄTZANZEIGE EINES BAUTEILS**

(30) Priorität: 25.11.2021 DE 102021130884
(71) Anmelder: MTU Aero Engines AG, 80995 München (DE)
(72) Erfinder: Bamberg, Joachim, 80995 München (DE); Kolb, Markus, 80995 München (DE); Hüller, Marco, 80995 München (DE); Schöbel, Yann, 80995 München (DE)

(57) **Zusammenfassung**

Die Erfindung betrifft ein Verfahren (100) zum Klassifizieren einer Ätzanzeige (11) eines Bauteils (10), aufweisend Schritte des Bereitstellens einer Aufnahme (13) der wenigstens einen Ätzanzeige (11); des Erfassens wenigstens eines Kriteriums (15) der Ätzanzeige (11) anhand der Aufnahme (13); des Vergleichens des ermittelten Kriteriums (15) mit wenigstens einem in einer Datenbank hinterlegten Kriterien-Datensatz (16) von Ätzanzeigen (11); und des Zuordnens der Ätzanzeige (11) zu wenigstens einer vorbestimmten Defektklasse (D) auf Basis des Vergleichs.

## Beschreibung

Die Erfindung betrifft ein Verfahren zum Klassifizieren einer Ätzanzeige eines Bauteils sowie eine Verwendung eines mittels dieses Verfahrens klassifizierten Bauteils.

Insbesondere in Technologien, bei denen nur geringe Fehlertoleranzen zulässig sind, ist eine objektive und zuverlässige Diagnose von Fehlstellen essentiell. Es ist bekannt Oberflächen von insbesondere metallischen Bauteilen mit einem ätzenden Stoff zu behandeln, um chemische und/oder strukturelle Inhomogenitäten im Materialgefüge, wie beispielsweise eine Seigerung, sichtbar detektierbar zu machen. Solche Oberflächen werden anschließend einer manuellen Sichtprüfung unterzogen, um sogenannte Ätzanzeigen zu identifizieren und zu deuten. Um eine Bewertung und/oder Klassifikation eines möglichen Defekts zu ermöglichen, können solche Ätzanzeigen metallographisch präpariert werden. Zudem können Replika angefertigt werden, um eine Prüfung dieser zu ermöglichen und somit eine Entscheidungsgrundlage dafür zu bieten, ob das betreffende Bauteil bestimmungsgemäß eingesetzt werden kann, oder ob es sich aufgrund einer Ätzanzeige um ein Schlechtteil handelt, welcher nicht den Qualitätsvorgaben entspricht und somit entsorgt werden muss.

Hiervon ausgehend ist es eine Aufgabe der vorliegenden Erfindung, ein Verfahren zum Klassifizieren wenigstens einer Ätzanzeige eines Bauteils vorzuschlagen, welches insbesondere eine Reproduzierbarkeit des Klassifizierungsergebnisses aufweist. Ferner soll eine auf der Klassifizierung basierende Verwendung eines Bauteils, welches eine Ätzanzeige aufweist, zur Verfügung gestellt werden. Dies wird erfindungsgemäß durch die Lehre der unabhängigen Ansprüche erreicht. Vorteilhafte Ausführungen der Erfindung sind Gegenstand der Unteransprüche.

Zur Lösung der Aufgabe wird ein Verfahren zum Klassifizieren wenigstens einer Ätzanzeige eines Bauteils vorgeschlagen, aufweisend einen Schritt zum Bereitstellen wenigstens einer Aufnahme der wenigstens einen Ätzanzeige; einen Schritt zum Erfassen wenigstens eines Kriteriums der Ätzanzeige anhand der Aufnahme; einen Schritt, in dem das wenigstens eine ermittelte Kriterium mit wenigstens einem in einer Datenbank hinterlegten Kriterien-Datensatz von Ätzanzeigen verglichen wird; einen Schritt zum Zuordnen der Ätzanzeige zu wenigstens einer vorbestimmten Defektklasse auf Basis des Vergleichs; und einen Schritt des Zuordnens der Ätzanzeige zu wenigstens einer vorbestimmten Kritikalitätsklasse auf Basis der Defektklasse der wenigstens einen Ätzanzeige des Bauteils.

Das Verfahren ermöglicht ein systematisches Erfassen, Zuordnen und Evaluieren von Merkmalen. So kann eine Vorsortierung bzw. Zuordnung von Ätzanzeigen an Bauteilen zu vorbestimmten Kategorien bzw. entsprechend einer Systematik nach objektiv bewerteten Kriterien erfolgen, welche zum einen, insbesondere durch maschinelle Unterstützung bei der Auswertung, präziser und einheitlicher und zum anderen reproduzierbar durchführbar ist. In die Zuordnung der Ätzanzeige zu wenigstens einer vorbestimmten Defektklasse können beispielsweise auch zusätzliche Daten zum betreffenden Bauteil einbezogen werden, wie insbesondere eine Fertigungshistorie des Bauteils, welches die Ätzanzeige aufweist, beispielsweise bezüglich durchgeführter Umformungen oder Wärmebehandlungen.

Ein Bauteil ist insbesondere eine Komponente oder ein Element einer Baugruppe, die zum Einsatz in einer Vorrichtung ausgebildet ist und kann einen metallischen Werkstoff insbesondere in Form einer Legierung aufweisen. Beispielsweise kann ein solches Bauteil eine Komponente eines Rotors oder eines Stators für eine Strömungsmaschine oder ein Klasse-1-Bauteil, insbesondere eine Verdichter- oder Turbinenscheibe (Disk) zur Aufnahme von Laufschaufeln oder ein integraler Verdichter- oder Turbinenlaufschaufelkranz (Blisk) für eine Strömungsmaschine wie ein Flugtriebwerk sein und kann somit besonderen Qualitätsanforderungen unterworfen sein.

Eine Ätzanzeige ist insbesondere ein Bereich einer mittels eines Ätzverfahrens behandelten Oberfläche des Bauteils, welcher eine, insbesondere durch die Ätzung in Erscheinung tretende, Unregelmäßigkeit bzw. Inhomogenität einer strukturellen Eigenschaft im Material des Bauteils, insbesondere eine Abweichung in der Mikrostruktur des Bauteils, aufweist. Hierbei können mittels der Ätzanzeige beispielsweise bestimmte, wie eine lokale An- oder Abreicherung von Legierungselementen, eine chemische Seigerung oder Entmischung sowie eine Inhomogenität von Legierungselementen oder Einschlüsse erkennbar werden. Die Präsenz bzw. das Auftreten einer Ätzanzeige an dem Bauteil kann einen Hinweis auf eine Beeinträchtigung des Bauteils geben. Je nach Ausprägung der Ätzanzeige bzw. deren Merkmale kann diese ein Indiz für beispielsweise eine kritische Beeinträchtigung sein, welche zu einer Unbrauchbarkeit des Bauteils führt, oder eine Scheinanzeige, wonach das Bauteil mit einer Ätzanzeige geeignet für den bestimmungsgemäßen Gebrauch ist.

Eine Aufnahme der Ätzanzeige ist insbesondere eine Abbildung bzw. graphische Darstellung der Ätzanzeige, beispielsweise eine mikroskopische Lichtbildaufnahme bzw. ein lichtmikroskopisches Bild, und kann in Form von Bilddaten vorliegen. Die Aufnahme kann beispielsweise unter Zuhilfenahme einer digitalen Lupe oder Linsenvorrichtung am Bauteil, insbesondere unter verschiedenen Beleuchtungswinkeln, aufgenommen sein bzw. werden. Es kann vorgesehen sein, mehrere Aufnahmen einer Ätzanzeige bereitzustellen. Hierbei können sich Aufnahmen beispielsweise durch die Art der Beleuchtung der Ätzanzeige oder anderer Aufnahmebedingungen unterscheiden, wodurch unterschiedliche Merkmale derselben Ätzanzeige sichtbar bzw. erkennbar werden können. Insbesondere sind auf der Aufnahme strukturelle Eigenschaften der Ätzanzeige wie beispielsweise Korngröße, Segregation, sowie Form, Größe und Verteilung von Phasen und Einschlüssen des Bauteilmaterials im Bereich der Ätzanzeige, insbesondere möglichst deutlich, dargestellt.

Ein erfasstes Kriterium ist insbesondere ein detektierbares bzw. visuell erkennbares Merkmal der Ätzanzeige und/oder der Aufnahme der Ätzanzeige und kann beispielsweise eine Korngröße oder eine Delta-Struktur (δ-Struktur) einer Gefügestruktur des Bauteilmaterials an der bzw. im Bereich der Ätzanzeige sein.

Ein Erfassen eines Kriteriums bzw. einer Eigenschaft der Ätzanzeige bzw. der Aufnahme der Ätzanzeige kann mittels eines Bildanalyseverfahrens erfolgen. Dabei kann das Erfassen ein computerimplementiertes Verfahren zur Verarbeitung eines Bildes insbesondere in einem neuronalen Netzwerk umfassen. Beispielsweise können optische Kriterien bzw. Features, insbesondere mittels sogenannter "Feature Extraction Layers", aus Bilddaten extrahiert und zur Weiterverarbeitung bereitgestellt werden. Neuronale Netzwerke, wie z.B. ein Convolutional Neural Network (CNN), sind bekannt und können eingerichtet sein, ein Merkmal bzw. ein Kriterium und/oder einen geeigneten Satz von Merkmalen bzw. Kriterien in einem Bild aufzufinden und als Datensatz, beispielsweise in einer sogenannten "Feature Map" zu hinterlegen.

Ein Vergleich des wenigstens einen ermittelten Kriteriums bzw. Feature mit wenigstens einem in einer Datenbank hinterlegten Kriterien-Datensatz von Ätzanzeigen kann insbesondere auf der Basis einer Mustererkennung und/oder eines Bildvergleichs erfolgen. Beispielsweise können entsprechend erstellte "Feature Maps", also Matrizen, die Information über die optischen Features einer Aufnahme enthalten, mit bereits in der Datenbank hinterlegten Aufnahmen von Ätzanzeigen bzw. dazugehörigen Datensätzen verglichen werden. Dabei kann eine Ausprägung und/oder Verteilung eines Kriteriums bzw. Features mit den in der Datenbank hinterlegten Datensätzen abgeglichen werden, um vergleichbare Bilder zu identifizieren. Dies kann beispielsweise auch mittels des oder eines Neuronalen Netzwerks und damit mittels eines KI-Modells erfolgen.

Auf Basis dieses Vergleichs wird die Ätzanzeige, insbesondere durch das Neuronale Netzwerk, zu wenigstens einer vorbestimmten, insbesondere in dem Neuronalen Netzwerk hinterlegten, Defektklasse zugeordnet. Hierbei wird die Ätzanzeige insbesondere einer Defektklasse zugeordnet, welche bereits vergleichbare bzw. ähnliche Ätzanzeigen enthält.

Eine Defektklasse ist insbesondere Teil einer vorbestimmten Klassifikation bzw. Systematik, wobei jeder Defektklasse wenigstens ein Kriterium zugeordnet ist, das zum Unterscheiden bzw. Einordnen von Ätzanzeigen dient, abhängig von, insbesondere verschiedenen identifizierten Eigenschaften und/oder Ausprägungen von Eigenschaften der Ätzanzeige bzw. Aufnahme davon. Eine Defektklasse ist insbesondere durch einen vorbestimmten Defekttyp charakterisiert und ermöglicht somit eine Korrelation zwischen einem erfassten Kriterium bzw. einer optischen Eigenschaft und dem Defekttyp der Ätzanzeige.

Eine erste Defektklasse kann einen ersten Defekttyp oder erste Defekttypen umfassen bzw. diesen zugeordnet sein, wobei ein solcher Defekt(typ) des Bauteils beispielsweise durch einen ersten Korngrößenbereich charakterisiert ist, der beim Auftreten stets zum Ausschuss des Bauteils führt. Eine zweite Defektklasse kann beispielsweise einen Defekttyp umfassen, der durch eine vorbestimmte Abweichung von einer vorbestimmten Delta-Struktur charakterisiert ist. Eine dritte Defektklasse kann beispielsweise einen Defekttyp umfassen, der eine sogenannte "Scheinanzeige" darstellt, wobei eine Inhomogenität des Bauteils bzw. der Ätzanzeige angezeigt wird, diese aber etwa fälschlicherweise erscheint oder sich die Art der Inhomogenität als nicht relevant für beispielsweise eine mechanische Stabilität des Bauteils herausstellt und somit keine Fehlstelle im Sinne der vorliegenden Offenbarung darstellt.

Weitere Defektklassen können weitere Defekttypen umfassen, beispielsweise sogenannte Defekte vom Typ "Light Etch Indication (LEI)", die jeweils beispielsweise einen Korngrößenbereich und/oder eine Abweichung von einer Delta-Struktur umfassen, welche je nach Ausprägung in ihrer Relevanz für eine Bewertung einer Ätzanzeige unterschieden werden können. Insbesondere können hier Defekttypen des "moderaten LEI", des "Clean White Spot (CWS)", des "Dirty White Spots (DWS)" und der "Non Metallic Inclusion (NMI)" unterschieden werden, die jeweils durch eine vorbestimmte, in der Ätzanzeige bzw. der Aufnahme in Erscheinung tretende, Ausprägung und/oder Verteilung einer visuellen Struktur charakterisiert ist.

Solche in Defektklassen eingeordnete Ätzanzeigen können einer weiteren Beurteilung bzw. Auswertung durch Prüfpersonal bedürfen, um eine Bewertung hinsichtlich eines etwaigen bestimmungsgemäßen Einsatzes des Bauteils zu ermöglichen. Eine solche Beurteilung kann dann, insbesondere ausgehend von der Lage der Ätzanzeige am Bauteil und/oder einer Ausprägung beispielsweise einer Gefügevergröberung des Bauteilmaterials erfolgen, wobei üblicherweise vorgesehen ist, die Ätzanzeige durch Prüfpersonal zu prüfen bzw. zu interpretieren. Hierzu kann vorgesehen sein, dem Prüfpersonal die dem Ergebnis der im Verfahren zur Klassifizierung der Ätzanzeige zugrundeliegenden Daten anzuzeigen, insbesondere die bereitgestellte Aufnahme und das wenigstens eine ermittelte Kriterium des Ätzanzeige sowie den wenigstens einen für den Vergleich herangezogenen Kriterien-Datensatz von Ätzanzeigen aus der Datenbank.

Eine Kritikalitätsklasse ist insbesondere Teil einer vorbestimmten Klassifikation bzw. Systematik, wobei jeder Kritikalitätsklasse wenigstens eine Defektklasse zugeordnet ist. Kritikalitätsklassen dienen zur Unterscheidung bzw. Einordnung von Ätzanzeigen von Bauteilen, welche unkritische Defekte aufzeigen und somit insbesondere mit höherer Wahrscheinlichkeit zur Verwendung freigegeben werden können und solchen Ätzanzeigen von Bauteilen, welche kritische Defekte aufzeigen und somit insbesondere mit höherer Wahrscheinlichkeit nicht eingesetzt oder verwendet werden können, da eine Beeinflussung von mechanischen Eigenschaften nicht ausgeschlossen werden kann. Eine weitere und/ oder alle Kritikalitätsklasse(n) kann/können Defekttypen umfassen, welche einer manuellen Bewertung durch Prüfpersonal bedürfen.

Damit kann eine Erfassung und Verarbeitung von zur Bewertung von Ätzanzeigen notwendigen Daten teilweise automatisiert vorgenommen werden. Durch den maschinellen bzw. automatisierten Vergleich mit bereits geprüften und klassifizierten Ätzanzeigen kann eine genaue und schnelle Zuordnung in Defektklassen vorgenommen werden, um ein Bereitstellen wenigstens einer Vorauswahl von relevanten Ätzanzeigen bzw. Bauteilen mit relevanten Ätzanzeigen zu ermöglichen.

Bei einer Ausführungsform kann das Verfahren einen zusätzlichen Schritt des Ätzens wenigstens eines Bereichs einer Oberfläche eines Bauteils aufweisen, um eine Ätzanzeige bereitzustellen. Hierbei kann das Bauteil unter Wahl eines geeigneten Ätzmittels insbesondere einer Tauch- und/oder Wischätzbehandlung unterzogen werden, um bestimmte strukturelle Eigenschaften eines Werkstoffs, insbesondere Metalls darzustellen, die beispielsweise nach einem Polieren nicht sichtbar sind. Hierbei aufgezeigte Inhomogenitäten oder Auffälligkeiten stellen eine Ätzanzeige dar, welche dann weiter untersucht und/oder im Rahmen des vorgeschlagenen Verfahrens klassifiziert bzw. bewertet werden können. Eine strukturelle Eigenschaft bzw. Feature kann beispielsweise eine Korngröße und/oder Form, Größe und Verteilung von Phasen im Gefüge des Bauteilmaterials sein.

Bei einer Ausführungsform charakterisiert das wenigstens eine Kriterium eine Ausprägung und/oder Verteilung einer visuellen Struktur der Ätzanzeige. Hierbei kann eine visuelle Struktur beispielsweise eine Korngröße, eine Korngrenze, eine Segregation oder eine Delta-Struktur des Gefüges des Bauteilmaterials charakterisieren oder sein. Eine Ausprägung ist insbesondere eine räumliche und/oder flächige Anordnung oder eine Eigenart einer strukturellen Inhomogenität, wie beispielsweise eine damit verbundene Verfärbung bzw. Schattierung. Eine Verteilung ist insbesondere eine räumliche und/oder flächige Ausdehnung bzw. Anordnung von Strukturveränderungen relativ zueinander und/oder in Bezug auf eine Fläche der Ätzanzeige. Hierdurch kann eine Beschränkung der Bewertung bzw. Klassifizierung auf visuell erfassbare Merkmale der Ätzanzeige geschaffen werden, welche einen objektiven Vergleich von Kriterien erlaubt.

Bei einer Ausführungsform charakterisiert das wenigstens eine Kriterium einen auf der Aufnahme abgebildeten Kontrast der Ätzanzeige. Hierbei weist die Ätzanzeige einen Kontrast zwischen dem zu untersuchenden Merkmal bzw. Kriterium und sonstigen Merkmalen auf bzw. die Aufnahme bildet diesen Kontrast ab. Dem Kontrast kann beispielsweise ein numerischer Kontrastwert zugeordnet werden, um einen Vergleich des Kriteriums mit hinterlegten Datensätzen zu vereinfachen und eine vereinfachte graphisch Darstellung in Form eines Diagramms zu ermöglichen. Ein solcher Kontrast kann ferner ein Gradient eines Kontrasts und/oder eine Intensität eines Kontrasts sein.

Somit kann beispielsweise ein Kontrast einer Ätzanzeige, welcher mittels eines Algorithmus in seiner Intensität und flächigen Ausprägung bewertet wird, mit einem Kontrast von in der Datenbank hinterlegten Aufnahmen verglichen werden. Hierdurch kann ein zusätzlicher Klassifikationsparameter bereitgestellt werden, mittels welchem eine quantifizierbare Basis für einen Vergleich mit bereits vorhandenen Ätzanzeigen geschaffen wird.

Bei einer Ausführungsform kann das Verfahren einen zusätzlichen Schritt des Ausgebens einer Zuordnung zu der wenigstens einen Defektklasse aufweisen. Dies kann beispielsweise in Form einer Ausgabe auf einem geeigneten Ausgabemittel, wie beispielsweise einem Display erfolgen oder in Form eines Datensatzes, welcher die erfassten Kriterien umfassen kann bzw. umfasst, insbesondere diejenigen Kriterien, welche für die Zuordnung der Ätzanzeige zu einer bestimmten Defektklasse ausschlaggebend sind bzw. waren. Der Datensatz kann eine graphische Darstellung umfassen und kann weiterverarbeitbar ausgebildet sein.

Bei der Bestimmung bzw. Auswertung von Kriterien kann es vorkommen, dass unterschiedliche Teilbereiche einer Ätzanzeige, insbesondere in Abhängigkeit der erfassten Kriterien, jeweils einer unterschiedlichen Defektklasse zugeordnet werden. Diese Zuordnung von Teilbereichen kann beispielsweise als Angabe von Flächenanteilsangaben der Ätzanzeige in Verbindung mit den jeweilige(n) Defektklasse(n) ausgegeben werden. Beispielsweise können 20% der Flächenanteile der Ätzanzeige einer ersten Defektklasse zugeordnet sein, 30% der Flächenanteile einer zweiten Defektklasse und 50% der Flächenanteile einer dritten Defektklasse. Hierdurch kann beispielsweise eine Interpretation der Ätzanzeige durch Prüfpersonal vereinfacht werden.

Bei einer Ausführungsform kann das Verfahren einen zusätzlichen Schritt des Ausgebens von zusätzlichen Kriterien-Datensätzen der wenigstens einen Defektklasse, zu welcher die Ätzanzeige zugeordnet wurde und/oder des Ausgebens einer Fertigungshistorie des Bauteils aufweisen. Beispielsweise können ein oder mehrere Vergleichsbild(er) aus der Datenbank, insbesondere zusammen mit einer, insbesondere bereits hinterlegten Bewertung der im Vergleichsbild dargestellten Ätzanzeige, ausgegeben werden. Das Ausgeben solcher zusätzlicher Daten kann beispielsweise als Ergänzung für eine Auswahl einer Ätzanzeige zur metallographischen Präparation durch Prüfpersonal und/ oder zur Zuordnung der Ätzanzeige zu wenigstens einer vorbestimmten Defektklasse genutzt werden.

Beispielsweise kann ein numerischer Kontrastwert oder numerische Kontrastwerte der Ätzanzeige bzw. der Aufnahme ausgegeben werden. Ein solcher Kontrastwert kann auf eine Zahl reduziert werden (z. B. Werte zwischen 0 und 1) oder in Form eines Plots, beispielsweise als sogenannter "Surface-Plot" ausgegeben werden. Hierbei können Kontrastwerte im Bereich der Ätzanzeige illustriert werden, welche sich signifikant vom Hintergrund-Kontrast abheben. Somit können ausgewählte Vergleichsbilder mit ihrem Kontrastwert dargestellt und für Prüfpersonal zur Verfügung gestellt werden, insbesondere zusammen mit einer bereits erfolgten und hinterlegten Bewertung der Ätzanzeige des Vergleichsbilds, um eine objektive und einheitliche Bewertung von Ätzanzeigen zu ermöglichen.

Zudem können Metadaten beispielsweise betreffend eine Fertigungshistorie des Bauteils ausgegeben werden. Eine Fertigungshistorie kann beispielsweise Informationen eines Point-Tracking Algorithmus, insbesondere in Kombination mit einer Fertigungssimulation enthalten, um einen Punkt am Bauteil auf dessen Lage in einem Fertigungsvormaterial zurück rechnen zu können. Die Lage im Fertigungsvormaterial kann Informationen darüber enthalten, ob ein Defekt auf dem Fertigungsverfahren basiert. Ein entsprechendes Fertigungsverfahren kann beispielsweise ein Schmiede- und/oder ein Gießverfahren sein. Somit kann beispielsweise ein Defekttyp bzw. eine Defektklasse noch genauer bestimmt werden und in Form eines Aufschlags für eine Wahrscheinlichkeit einer bestimmten Defektklasse in einen Zuordnungsschritt einfließen.

Bei einer Ausführungsform kann das Verfahren einen zusätzlichen Schritt des Ausgebens der Zuordnung zu der wenigstens einen Kritikalitätsklasse aufweisen. Hierdurch kann angezeigt werden, ob ein Bauteil einen oder mehrere unkritische Defekte aufweist und somit zur Verwendung freigegeben werden kann, oder ob ein Bauteil einen oder mehrere kritische Defekte aufweist und somit nicht eingesetzt oder verwendet werden kann.

Damit kann dem Prüfpersonal eine Klassifizierung bzw. Einschätzung der Kritikalitätsklasse und insbesondere auch einer Defektklasse ausgegeben werden, welche zur Entscheidungsfindung über einen Verbleib des Bauteils nutzbar ist. Zudem können Vergleichsbilder aus Datensätzen der Datenbank mit deren zugehöriger Kritikalitätsklassifizierung nach einer metallographischen Präparation bereitgestellt werden. Beispielsweise kann das Prüfpersonal ähnliche Ätzanzeigen, insbesondere bereits bewertete Ätzanzeigen, in Augenschein nehmen und zur Bewertung des Prüfobjekts bzw. der klassifizierten Ätzanzeige des Bauteils heranziehen.

Bei einer Ausführungsform kann das Bauteil unter Berücksichtigung einer Gewichtung der Defektklasse zu einer Kritikalitätsklasse zugeordnet werden. Die Gewichtung der Defektklasse kann beispielsweise eine Wahrscheinlichkeit für einen, insbesondere bekannten, Einfluss auf mechanische Eigenschaften des Bauteils in Abhängigkeit eines Defekttyps beinhalten bzw. abbilden, um eine Rangfolge für eine Überprüfung durch Prüfpersonal vorgeben zu können.

In einem weiteren Aspekt wird eine Verwendung eines Bauteils, aufweisend wenigstens eine Ätzanzeige, vorgeschlagen, wobei die Verwendung in Abhängigkeit einer Zuordnung der Ätzanzeige zu einer Kritikalitätsklasse erfolgt und die Zuordnung der wenigstens einen Ätzanzeige des Bauteils mittels eines hierin beschriebenen Verfahrens bereitgestellt ist. Durch die verfahrensgemäße Einordnung in kritische und unkritische Bauteile wird eine Unterscheidung von zur Verwendung geeigneten und ungeeigneten Bauteilen ermöglicht.

Eine Verwendung eines solchen Bauteils, insbesondere in oder an einer Vorrichtung bietet den Vorteil, dass ein Erfüllen von Qualitäts- und/oder Sicherheitsstandards anhand von objektiven Kriterien in reproduzierbarer Weise überprüft worden ist. Damit kann ein Risiko für ein Materialversagen an dem betreffenden Bauteil verringert und eine Betriebssicherheit des Bauteils bzw. der Vorrichtung erhöht werden.

Bei einer Ausführungsform erfolgt eine bestimmungsgemäße Verwendung eines solchen Bauteils bei einem Betrieb einer Strömungsmaschine in Abhängigkeit von der Zuordnung der Ätzanzeige des Bauteils. Eine bestimmungsgemäße Verwendung ist insbesondere eine fachübliche Verwendung eines Bauteils als solches oder als Komponente einer Einrichtung und/oder Vorrichtung entsprechend der anwendbaren Vorgaben und Standards. Insbesondere das Erfüllen solcher Normen und/oder Standards ist bei einer solche Verwendung in Verbindung mit der vorher erfolgten Klassifizierung wenigstens einer Ätzanzeige des Bauteils nachprüfbar.

Bei einer Ausführungsform der Verwendung ist das Bauteil eine Komponente eines Rotors für eine Strömungsmaschine und/oder ein Klasse-1-Bauteil, insbesondere eine Verdichter- oder Turbinenscheibe (Disk) zur Aufnahme von Laufschaufeln oder ein integraler Verdichter- oder Turbinenlaufschaufelkranz (Blisk). Mithilfe eines vorausgehend durchlaufenen Klassifizierungsverfahrens kann das Erfüllen hoher Sicherheitsanforderungen für die bestimmungsgemäße Verwendung des Bauteils insbesondere auch für einen Einsatz in der Luftfahrt auf nachprüfbare Weise belegt werden.

Weitere Merkmale, Vorteile und Anwendungsmöglichkeiten der Erfindung ergeben sich aus der nachfolgenden Beschreibung im Zusammenhang mit den Figuren. Es zeigt
- Fig. 1: eine schematische Darstellung eines Ablaufs des erfindungsgemäßen Verfahrens zum Klassifizieren einer Ätzanzeige eines Bauteils aufweisend wenigstens eine Ätzanzeige; und
- Fig. 2: ein schematisches Ablaufdiagram einer erfindungsgemäßen Verwendung eines Bauteils.

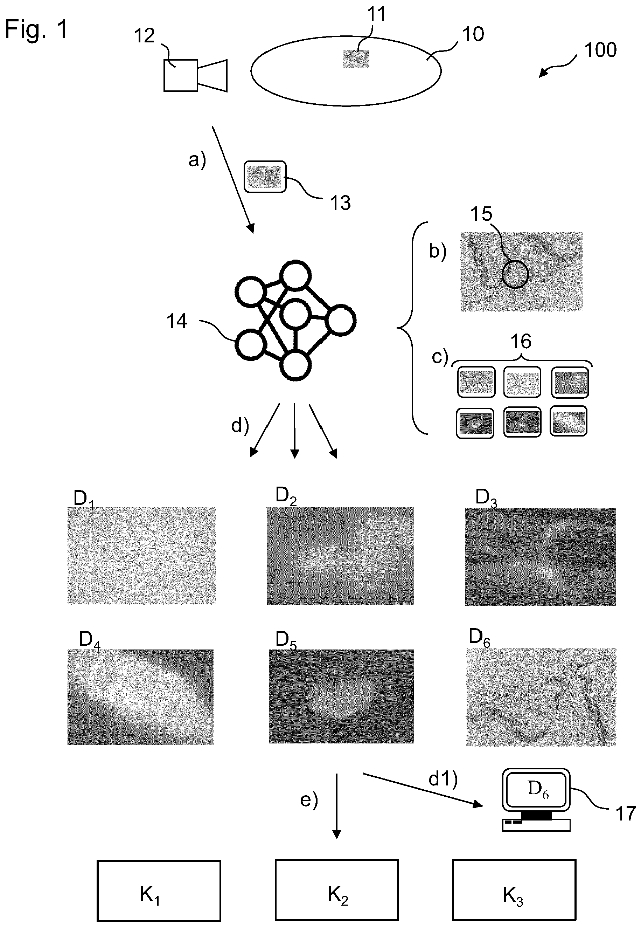

**Fig. 1** zeigt eine schematische Darstellung eines Ablaufs eines beispielhaften Verfahrens 100 zum Klassifizieren einer Ätzanzeige 11 eines Bauteils 10.

In einem ersten Schritt i) wird wenigstens eine Oberfläche eines Bauteils 10 geätzt bzw. einem Ätzverfahren unterzogen, um wenigstens eine Ätzanzeige 11 bereitzustellen. Das dargestellte Bauteil 10 weist in diesem Ausführungsbeispiel eine Ätzanzeige 11 auf. Von dieser Ätzanzeige 11 wird mittels einer Aufnahmevorrichtung 12 eine Aufnahme 13 erzeugt und in einem Schritt a) wird die Aufnahme 13 der Ätzanzeige 11 einer Verarbeitungseinheit 14, hier einem Neuronalen Netzwerk, in Form eines Datensatzes bereitgestellt. In weiteren Ausführungsbeispielen werden mehrere Aufnahmen 13, insbesondere mit unterschiedlichen Aufnahmebedingungen, erzeugt und/oder bereitgestellt.

In einem Schritt b) wird wenigstens ein Kriterium 15 der Ätzanzeige 11 anhand der Aufnahme erfasst wobei das wenigstens eine Kriterium eine Ausprägung und/oder Verteilung einer visuellen Struktur der Ätzanzeige 11 charakterisiert und in dem dargestellten Ausführungsbeispiel einen auf der Aufnahme 13 abgebildeten Kontrast der Ätzanzeige 11 charakterisiert.

In einem Schritt c) wird das ermittelte Kriterium 15 mit wenigstens einem in einer Datenbank hinterlegten Kriterien-Datensatz 16 von Ätzanzeigen 11 verglichen und in einem Schritt d) wird die Ätzanzeige 11 auf Basis des Vergleichs zu wenigstens einer Defektklasse D₆ mehrerer vorbestimmten Defektklassen D₁ bis D₆ zugeordnet. Hierbei kann eine erste Defektklasse D₁ einen Defekttyp umfassen, der eine sogenannte "Scheinanzeige" darstellt, eine zweite Defektklasse D₂ einen Defekttyp eines "LEI", welcher eine Gefügekornvergrößerung aufweist, eine dritte Defektklasse D₃ einen Defekttyp des "moderaten LEI", welcher eine moderate Gefügekornvergrößerung und eine nicht spezifikationsgerechte Delta-Struktur aufweist, eine vierte Defektklasse D₄ einen Defekttyp "Clean White Spot (CWS)", eine fünfte Defektklasse D₅ einen Defekttyp des "Dirty White Spots (DWS)" und eine sechste Defektklasse D₆ einen Defekttyp der "Non Metallic Inclusion (NMI)".

In einem optionalen Schritt d1) wird die Zuordnung zu der Defektklasse D₆ mittels einer Anzeigeeinrichtung 17 ausgegeben, wobei in einem optionalen Schritt d2) zusätzliche Kriterien-Datensätze der Defektklasse D, zu welcher die Ätzanzeige 11 zugeordnet wurde, sowie eine Fertigungshistorie und ein numerischer Kontrastwert ausgegeben werden können.

In einem Schritt e) wird die Ätzanzeige 11 des Bauteils 10 im Ausführungsbeispiel auf Basis der Defektklasse D der Ätzanzeige 11 des Bauteils 10 zu einer vorbestimmten Kritikalitätsklasse K₂ zugeordnet. Dabei können einer ersten Kritikalitätsklasse K₁ beispielsweise erste Defekttypen, beispielsweise die erste Defektklasse D₁, zugeordnet sein, die zweite Kritikalitätsklasse K₂ kann zweite Defekttypen, beispielsweise die zweite und dritte Defektklasse D₂, D₃, umfassen und eine dritte Kritikalitätsklasse K₃ kann dritte Defekttypen, beispielsweise Defektklassen D₄, D₅ und D₆ umfassen. Hierbei kann vorgesehen sein, dass alle wenigstens einer Kritikalitätsklasse K zugeordneten Ätzanzeigen 11 bzw. Bauteile 10 mit Ätzanzeigen 11 einer manuellen Bewertung durch Prüfpersonal unterzogen werden. Auch diese Zuordnung zu der Kritikalitätsklasse K kann in einem optionalen Schritt e1), insbesondere zusammen mit zusätzlichen Kriterien-Datensätzen der Defektklasse D, zu welcher die Ätzanzeige 11 zugeordnet wurde, sowie eine dem Bauteil 10 zugehörige Fertigungshistorie und ein numerischer Kontrastwert bzw. Kontrastwerte der Ätzanzeige 11 bzw. der Aufnahme 13 ausgegeben werden.

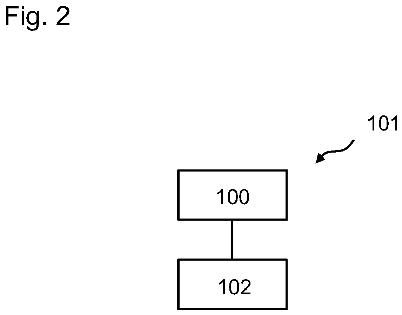

**Fig. 2** zeigt ein schematisches Ablaufdiagramm einer Verwendung 101 eines beispielhaften Bauteils 10 mit wenigstens einer Ätzanzeige 11. Bei der Verwendung 101 erfolgt eine bestimmungsgemäße Verwendung 102 des Bauteils 10 in einem Betrieb eines Flugtriebwerks in Abhängigkeit von einer Zuordnung zu einer Kritikalitätsklasse K und die Zuordnung des Bauteils 10 erfolgt mittels eines Verfahrens 100 zum Klassifizieren einer Ätzanzeige eines Bauteils, insbesondere gemäß dem in Fig. 1 dargestellten Ausführungsbeispiel.

### BEZUGSZEICHENLISTE

- 10: Bauteil
- 11: Ätzanzeige
- 12: Aufnahmevorrichtung
- 13: Aufnahme
- 14: Verarbeitungsvorrichtung
- 15: Kriterium
- 16: Datensatz
- 100: Verfahren
- 101: Verwendung
- 102: bestimmungsgemäße Verwendung
- D: Defektklasse
- K: Kritikalitätsklasse
- a) bis e), i): Schritte

## Patentansprüche

1. Verfahren (100) zum Klassifizieren wenigstens einer Ätzanzeige (11) eines Bauteils (10) , aufweisend die folgenden Schritte:
a) Bereitstellen wenigstens einer Aufnahme (13) der wenigstens einen Ätzanzeige (11);
b) Erfassen wenigstens eines Kriteriums (15) der Ätzanzeige (11) anhand der Aufnahme (13);
c) Vergleichen des wenigstens einen ermittelten Kriteriums (15) mit wenigstens einem in einer Datenbank hinterlegten Kriterien-Datensatz (16) von Ätzanzeigen (11);
d) Zuordnen der Ätzanzeige (11) zu wenigstens einer vorbestimmten Defektklasse (D) auf Basis des Vergleichs; und
e) Zuordnen der Ätzanzeige (11) zu wenigstens einer vorbestimmten Kritikalitätsklasse (K) auf Basis der Defektklasse (D) der wenigstens einen Ätzanzeige (11) des Bauteils (10).

2. Verfahren (100) nach Anspruch 1, aufweisend den zusätzlichen Schritt:
i) Ätzen wenigstens eines Bereichs einer Oberfläche eines Bauteils (10), um eine Ätzanzeige (11) bereitzustellen.

3. Verfahren (100) nach einem der vorhergehenden Ansprüche, wobei das wenigstens eine Kriterium (15) eine Ausprägung und/oder Verteilung einer visuellen Struktur der Ätzanzeige (11) charakterisiert.

4. Verfahren (100) nach Anspruch 3, wobei das wenigstens eine Kriterium (15) einen auf der Aufnahme (13) abgebildeten Kontrast der Ätzanzeige (11) charakterisiert.

5. Verfahren (100) nach einem der vorhergehenden Ansprüche, aufweisend den zusätzlichen Schritt:
d1) Ausgeben der Zuordnung zu der wenigstens einen Defektklasse (D).

6. Verfahren (100) nach einem der vorhergehenden Ansprüche, aufweisend den zusätzlichen Schritt:
d2) Ausgeben von zusätzlichen Kriterien-Datensätzen (16) der wenigstens einen Defektklasse (D), zu welcher die Ätzanzeige (11) zugeordnet wurde und/oder Ausgeben einer Fertigungshistorie.

7. Verfahren (100) nach einem der vorhergehenden Ansprüche, aufweisend den zusätzlichen Schritt:
el) Ausgeben der Zuordnung zu der wenigstens einen Kritikalitätsklasse (K).

8. Verfahren (100) nach einem der vorhergehenden Ansprüche, wobei die Ätzanzeige (11)unter Berücksichtigung einer Gewichtung der Defektklasse (D) zu einer Kritikalitätsklasse (K) zugeordnet wird.

9. Verwendung (101) eines Bauteils (10), aufweisend (10) wenigstens eine Ätzanzeige (11), wobei die Verwendung (101) in Abhängigkeit einer Zuordnung der Ätzanzeige (11) zu einer Kritikalitätsklasse (K) erfolgt und die Zuordnung der wenigstens einen Ätzanzeige (11) des Bauteils (10) mittels einem Verfahren nach einem der vorhergehenden Ansprüche bereitgestellt ist.

10. Verwendung nach Anspruch 9, wobei eine bestimmungsgemäße Verwendung des Bauteils (10) bei einem Betrieb einer Strömungsmaschine in Abhängigkeit der Zuordnung der wenigstens einen Ätzanzeige (11) des Bauteils (10) erfolgt.

11. Verwendung nach Anspruch 9 oder 10, wobei das Bauteil eine Komponente eines Rotors für eine Strömungsmaschine ist und/oder ein Klasse-1-Bauteil, insbesondere eine Verdichter- oder Turbinenscheibe (Disk) zur Aufnahme von Laufschaufeln oder ein integraler Verdichter- oder Turbinenlaufschaufelkranz (Blisk), ist.
